Europäisches Patentamt

European Patent Office

Office européen des brevets

(19)

(11) Publication number: **0 046 364**
**B1**

(12) **EUROPEAN PATENT SPECIFICATION**

(45) Date of publication of patent specification: **01.02.84**

(21) Application number: **81303652.2**

(22) Date of filing: **11.08.81**

(51) Int. Cl.³: **C 03 C 3/22, C 03 C 3/04**

(54) **Fluorophosphate opal glasses and production thereof.**

(30) Priority: **13.08.80 US 177627**

(43) Date of publication of application:
**24.02.82 Bulletin 82/8**

(45) Publication of the grant of the patent:
**01.02.84 Bulletin 84/5**

(84) Designated Contracting States:
**BE DE FR GB IT NL**

(56) References cited:
**CA - A - 460 668**
**US - A - 2 394 502**
**US - A - 3 681 098**

(73) Proprietor: **CORNING GLASS WORKS**
**Houghton Park**
**Corning New York 14830 (US)**

(72) Inventor: **Flannery, James Elwin**
**110 East Third Street**
**Corning New York (US)**
Inventor: **Wexell, Dale Richard**
**158 Pine Street**
**Corning New York (US)**
Inventor: **Stempin, John Louis**
**McLaughlin Road**
**Beaver Dams New York (US)**

(74) Representative: **Smith, Sydney et al,**
**Elkington and Fife High Holborn House 52/54**
**High Holborn**
**London WC1V 6SH (GB)**

Courier Press, Leamington Spa, England.

# Fluorophosphate opal glasses and production thereof

This invention relates to fluorophosphate opal glasses and to the production thereof.

As is recognized in the art, opal glasses contain small particles which scatter light passing through the glass, thereby rendering such glasses light-diffusing. Hence, opal glasses consist of a transparent glassy matrix having at least one other phase dispersed therein. The dispersed phase(s) may be either crystalline or amorphous. The primary characteristics of the dispersed or opacifying phase which determine the density of light transmission include the refractive index, the dispersion, the size and shape of the particles, the particle distribution and the absolute number of particles.

There are two broad classes of opal glasses, *viz.* spontaneous opals and thermally opacifiable or reheat opals. Spontaneous opal glasses are characterised by the fact that the light-diffusing phase separates out ("strikes in") during the cooling and forming of the melt into a glass article. In contrast, the rate of opal development, i.e. the rate at which the light-diffusing phase separates out of the glassy matrix, is relatively slow in the thermally opacifiable glasses. Consequently, upon cooling and shaping the melt into a glass article, a substantially clear or only faintly opacified appearance is observed. The glass article must be reheated to temperatures in and/or above the transformation range of the glass to promote separation of the opacifying phase(s). It will be appreciated that, from a commercial point of view, spontaneous opal glasses are much to be preferred since no reheating is required to achieve the desired opacity.

There are two general categories of spontaneous opal glasses, the first being characterised as having an amorphous (non-crystalline) opacifying phase and the second as having a crystalline opacifying phase. Those of the first type have been termed "immiscible opals", i.e. opals wherein the opacifying phase is a glass which is not soluble in the matrix. The most common immiscible opals contain borate or phosphate in the opacifying phase. United States Patent Nos. 2,559,805 and 3,275,492 are illustrative thereof. United States Patent No. 3,661,601 describes another immiscible opal containing phase separated droplets or opacifying particles consisting of CaO and F or CaO, F, $B_2O_3$ and $SiO_2$. Numerous crystals have been precipitated to constitute the opacifying phase, the most common being either an alkali metal fluoride (most frequently NaF) or an alkaline earth metal fluoride (most often $CaF_2$).

In summary, a spontaneous opal glass attains the vast majority of its opacity during the cooling of the melt to a glass article and requires no reheating. Thus, the opacifying agent strikes in during the shaping of the melt to a glass article utilising conventional glass forming techniques, such as blowing, casting, drawing, pressing, rolling and spinning.

United States Patent No. 2,394,502 describes the production of opal glasses containing fluorapatite $[3R_3(PO_4)_2 \cdot RF_2]$, wherein R is selected from Ca, Ba, and Pb, as the primary crystalline opacifying phase. The glasses consist essentially, in weight percent on the oxide basis, of from 12 to 17% $Na_2O + K_2O$, up to 12% CaO, up to 4% BaO, up to 5% PbO, from 0 to 6% $Al_2O_3$, from 0 to 50% $B_2O_3$, from 4 to 9% $P_2O_5$, from 54 to 66% $SiO_2$ and from 2.5 to 5% F. The $Al_2O_3$ content of these glasses is far below that required in the present compositions, also the crystalline opacifying phase is different from the $Ba_2F(PO_4)$ species of the present glasses.

United States Patent No. 2,559,805 discusses the production of opal glasses containing $Ba_3(PO_4)_2$ as the predominant crystalline opacifying phase. The glasses consist essentially, in weight percent on the oxide basis, of from 7 to 15% alkali metal oxide, from 5 to 25% BaO, from 0 to 25% $B_2O_3$, from 2 to 10% $P_2O_5$, from 0 to 10% $Al_2O_3$ and from 50 to 70% $SiO_2$. Fluoride is nowhere indicated as being part of the glass composition so, consequently, the crystalline opacifying phase cannot be $Ba_2F(PO_4)$.

United States Patent No. 3,275,492 discloses the production of opal glasses consisting essentially, in mole percent on the oxide basis, of from 10 to 27% $B_2O_3$ (equivalent to from 12 to 30%, by weight), from 66 to 81% $SiO_2$ (equivalent to from 62 to 76%, by weight), from 3 to 24% of an oxide selected from ZnO, MgO, CaO, BaO, NiO, MnO, CoO and CuO, and from 1 to 7% alkali metal oxide. It is observed that, optionally, up to 4 mole percent F, up to 2 mole percent $P_2O_5$, or up to 5 mole percent $CeO_2$ may be included. The $B_2O_3$ contents are much higher than those that may be tolerated in the present glasses. Furthermore, there is no teaching of the presence of any crystalline opacifying phase.

United States Patent No. 3,498,801 relates to the production of opal glasses wherein opacification results form a liquid-liquid separation of a phosphate phase from the glass matrix. The glasses consist essentially, in weight percent on the oxide basis, of from 9 to 13.5% alkali metal oxides, from 1 to 2% CaO, from 0 to 1.5% BaO, from 5 to 12% $B_2O_3$, from 4 to 8% $Al_2O_3$, from 3 to 5.5% $P_2O_5$ and from 60 to 68% $SiO_2$. Fluoride is not a constituent of the glasses, the $Al_2O_3$ content is lower and the $B_2O_3$ level higher than required according to the present invention. Moreover, the opacifying phase in the prior art glasses is non-crystalline.

United States Patent No. 3,661,601 is concerned with opal glasses wherein glassy particles comprise the opal phase which consist essentially, in weight percent on the oxide basis, of from 3 to 10% $Na_2O + K_2O$, from 11 to 20% CaO, from 0 to 10% BaO, from 3 to 9% $Al_2O_3$, from 1 to 7% $B_2O_3$, from 0 to 10% $P_2O_5$, from 50 to 75% $SiO_2$ and from 2 to 4% F. The concentration of CaO is much higher

and the $Al_2O_3$ content lower than required in the present glasses. Furthermore, the opacifying phase in the prior art glasses is non-crystalline.

United States Patent No. 3,667,973 is directed to opal glasses wherein the opal phase is in the form of encapsulated crystalline droplets of NaF, LiF and/or KF, possibly containing $B_2O_3$ as an impurity. The glasses consist essentially, in weight percent on the oxide basis, of from 1.5 to 4% $Li_2O$, from 0 to 10% $Na_2O + K_2O$, from 0 to 1% BaO, from 1 to 3% $Al_2O_3$, from 7 to 14% $B_2O_3$, from 0 to 10% $P_2O_5$, from 70 to 80% $SiO_2$, from 1 to 3% $MoO_3$ and/or $As_2O_3$ and/or $WO_3$ and from 3 to 6% F. The $B_2O_3$ level is higher and the BaO and $Al_2O_3$ concentrations much lower than are useful in the present glasses. Also, the opacifying phase in the prior art glass is not $Ba_2F(PO_4)$.

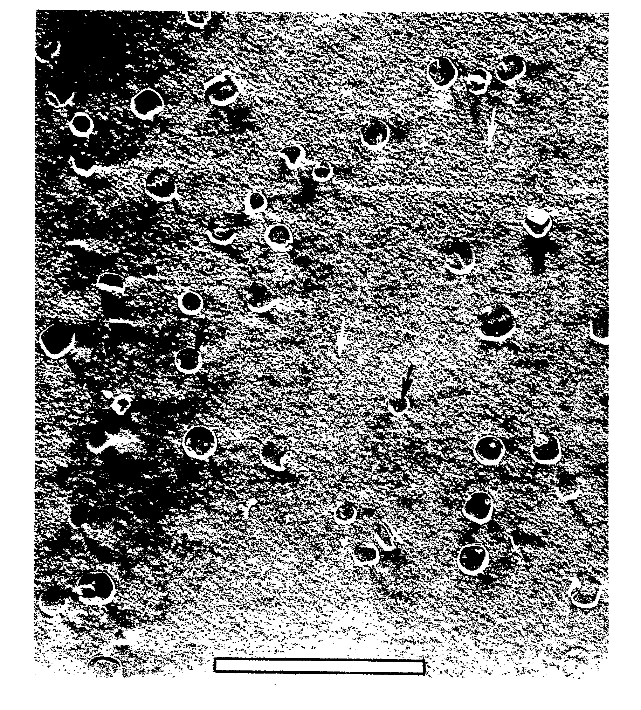

The present invention relates to a narrow range of compositions within the $Na_2O$—$K_2O$—BaO—$Al_2O_3$—$B_2O_3$—$SiO_2$—$P_2O_5$—F system which provide spontaneous opal glasses manifesting dense white opacity and excellent chemical durability, i.e. high resistance to attack by water, food acids and detergent solutions, thereby recommending the utility thereof in food service applications. Thus, the base glass compositions, expressed in terms of weight percent on the oxide basis, consist essentially of from 6 to 10% $Na_2O$, from 1 to 6% $K_2O$, from 4 to 11% BaO, from 9 to 18% $Al_2O_3$, from 1 to 5% $B_2O_3$, from 50 to 70% $SiO_2$, from 3.5 to 7% $P_2O_5$ and from 1 to 4% F. Optionally, the glasses may also contain up to 3.5% CaO and/or up to 5% total of SrO and/or MgO to modify the melting and forming character of the glass, as well as the physical properties thereof. Nevertheless, the sum of those three ingredients plus any other extraneous components will not exceed 5%, by weight. A barium fluorophosphate-type crystal phase constitutes the opacifying agents. Referring to the accompanying drawing, the electron micrograph illustrates this crystal phase interspersed in the glassy matrix, the arrows indicating the presence of spherules containing the crystal phase.

Accordingly, the present invention provides a spontaneous opal glass characterised in that it demonstrates a dense white appearance, a softening point of at least 710°C and excellent chemical durability, contains $Ba_2F(PO_4)$ as the predominant crystalline opal phase and comprises, expressed in terms of weight percent on the oxide basis, from 6 to 10% $Na_2O$, from 1 to 6% $K_2O$, from 4 to 11% BaO, from 9 to 18% $Al_2O_3$, from 1 to 5% $B_2O_3$, from 50 to 70% $SiO_2$, from 3.5 to 7% $P_2O_5$ and from 1 to 4% F.

The present invention also provides a process for the production of such glasses characterised in that it comprises compounding and melting appropriate batch materials.

The glasses of this fluorophosphate opal system are characterised by a two-stage liquidus, phenomenon. A high temperature cloudiness or opacification has been observed which may be characterised as an emulsification or liquid-liquid phase separation. Analysis of the separating phase has indicated it to be rich in $Na_2O$, BaO, $P_2O_5$ and F. The normal crystallisation opal liquidus occurs at from 400 to 1000°C, depending upon the relative concentration of the aforementioned species. X-ray diffraction analyses of the crystalline opal phase have identified the predominant crystal phase to be of a $Ba_2(OH)PO_4$-type. However, it is assumed that F easily substitutes for OH in this species. X-ray analysis does not distinguish between F and OH. Accordingly, the phase has been termed $Ba_2F(PO_4)$. Minor amount of $NaBaPO_4$ and other presently-unidentifiable species have also been detected. Those glasses exhibiting low temperature crystallisation opal liquidi have the capability of striking in further during the annealing process. The most desirable glass would remain essentially clear during the forming steps and then opacify in the course of annealing. Such glasses would be free from differential opacification, a problem sometimes encountered with glasses demonstrating high opal liquidus temperatures. It has been noted, however that in some instances glasses having low temperature opal liquidi are also subjected to surface crystallisation developed during the annealing heat treatment. This occurrence leads to a substantial loss of glossy appearance in the final product and/or reduced chemical durability as witnessed in detergent testing.

The present fluorophosphate opal glass system is composition sensitive with regard to maintaining the desired combination of excellent chemical durability and resistance to weathering, high softening point and dense white opacity. High levels of $Al_2O_3$ are crucial in achieving the desired detergent durability, as evidenced in resistance to alkali attack and in substantially eliminating weathering. It is conjectured that $Al_2O_3$ densifies the glassy matrix, thereby inhibiting gross migration of $Na^+$ and $F^-$ ions to the glass surface. The content of $Na_2O$ ought not to exceed 10% to ensure high resistance to weathering. Amounts of $Na_2O$ in excess of 10% also tend to raise excessively the coefficient of thermal expansion, lower the softening point and, when present in quantities of more than 14%, decrease opacity. A minimum softening point of about 710°C has been deemed necessary to permit the use of satisfactory enamel fluxes in the decoration process. However, high toxic metal releases from softer (lower temperature) enamels preclude the use for food service ware of substrate glasses having softening points substantially lower than about 780°C. Accordingly, glasses having softening points of at least 780°C are greatly to be preferred.

Minimum levels of 3.5% $P_2O_5$ and 4% BaO are required to achieve the desired opacity. Dense opacity is ensured with from 5 to 10% BaO. Excessive quantities of BaO impart two deleterious effects. Firstly, the microwave susceptibility of the glass greatly increases, thereby hazarding breakage in a microwave oven. Secondly, the density of the glass increases sharply, thereby yielding heavy finished ware. Excessive concentrations of $P_2O_5$ may adversely affect the chemical durability of the glasses and the meltability of the glass.

3

The relative contents of $Na_2O$, $BaO$, $P_2O_5$ and F govern the identity of the principal crystal phase. A minimum level of 1% F retained in the glass is adequate to generate the fluorophosphate phase and to hold the working or forming temperature at about 1325°C or below. A from 2 to 3% F content is preferred to maximise opacity and whiteness and to decrease the forming temperature. Such levels of F are also much less polluting of the environment than the conventional NaF and $CaF_2$ opal glasses which customarily employ 5% and more F. In the present glass compositions, from 70 to 80% of the fluoride in the batch materials will be retained in the shaped glass articles. Fluoride exerts a profound effect upon the viscosity of the glass as indicated by the softening point. For example, a 1% addition of fluoride to the base glass composition yields an increase in the softening point thereof of about 50°C. Consequently, adjustments of fluoride content provide for a wide latitude of softening points. It is postulated that this pronounced dependence of the glass upon fluoride levels reflects the fluorine atom entering the matrix of the glass structure.

$B_2O_3$ and $K_2O$ are important fluxing agents in the present glasses. In contrast to $Na_2O$, $B_2O_3$ or $B_2O_3$ together with $K_2O$ may be used to decrease the coefficient of thermal expansion of the glasses. These components are included to ensure a high temperature working viscosity corresponding to about 1325°C or lower. Hence, elimination of $K_2O$ or $B_2O_3$ causes a dramatic increase in the high temperature working viscosity unless the $Na_2O$ content is raised proportionately. Such action adversely affects the expansion and durability of the glasses. Nevertheless, the level of $K_2O$ should not exceed 6% because opacity appears to decrease due to the increasing fluxing behaviour exerted by the oxide. Thus, the opacifying crystal phase seems to be much more soluble in the $K_2O$-enriched matrix glass. Furthermore, and very importantly, the quantity of $B_2O_3$ ought to be maintained below 5% to forestall solubility of the crystal phase.

Concentrations of CaO in excess of 3% and MgO and/or SrO of more than 5% result in the glasses displaying very high emulsion liquidus temperatures coupled with opacification in the melt. Hence, high levels of those ingredients lead to devitrification of the glass. Thus, calcium and strontium phosphates are significantly less soluble in the glass matrix than are sodium barium phosphate or barium fluorophosphate. As a result, ware formed from such opal glasses demonstrate "mother-of-pearl" or iridescent surfaces, this phenomenon being derived from light refraction in the elongated crystals forming on or near the surface of the glass. Small quantities of CaO, MgO and/or SrO may be useful in modifying the physical properties of the glass while not substantially altering the opacity or chemical durability thereof.

If a coloured opal glass is desired, conventional glass colourants, such as CoO, $Cr_2O_3$, CuO, $Fe_2O_3$, $MnO_2$, NiO and $V_2O_5$, may be included in customary amounts, normally less than 2%.

Table 1 below records glass compositions, expressed in terms of parts, by weight, on the oxide basis as calculated from the batch, illustrating the compositional parameters of the present invention. Inasmuch as it is not known with which cation(s) the fluoride is combined, it is merely reported as fluoride (F) in accordance with conventional glass analysis practice. Moreover, because the sum of the several components totals or approximately totals 100, for all practical purposes, the values tabulated may be considered to be expressed in terms of weight percent. Where desired, an oxide of arsenic or a chloride salt may be included in the batch to perform the customary function thereof of a fining agent.

The actual batch ingredients may comprise various materials, either the oxides or other compounds, which, when melted together, will be converted into the desired oxide in the proper proportions. The fluoride will typically be added as sodium silicofluoride. Although the following description reflects laboratory and pilot plant scale melting, it will be understood that the recited compositions would also be operable in large scale commercial melting units.

The batch ingredients were compounded, tumble mixed together to aid in securing a homogeneous melt and placed into platinum crucibles. The crucibles were introduced into an electrically-fired furnace operating at from 1450 to 1550°C and the batches melted for four hours (after last fill). The melts were then cast into steel moulds to produce slabs about 15 cms × 15 cms × 1.3 cms (6" × 6" × $\frac{1}{2}$") or manually pressed into discs having a diameter of from 7.6 to 10.2 cms (from 3 to 4") and a thickness of from 0.32 to 0.64 cms (from 0.125 to 0.25"). The pressed discs were undertaken as a rather primitive form of quick quenching such as is encountered in commercial automatic pressing. The glass slabs were immediately transferred to an oven operating at the annealing temperature, that temperature maintained for one hour and then cooled to room temperature at furnace rate, i.e. at about 30°C/hour.

Additionally, 340 kg (750 pound) melts of certain glasses were made in gas-fired pilot plant furnaces, the glass hand gathered at from 1200 to 1400°C, depending upon viscosity, and hand pressed in cast iron moulds using steel plungers. Baking dishes and dinner plates were formed in this manner and annealed in a lehr. Where desired, the ware was fire-polished utilising conventional practices.

Table 2 below illustrates the retention of fluoride in the glass as analysed.

4

TABLE 1

| | 1 | 2 | 3 | 4 | 5 | 6 | 7 | 8 |
|---|---|---|---|---|---|---|---|---|
| $SiO_2$ | 56.00 | 56.24 | 54.62 | 60.10 | 58.67 | 60.50 | 58.80 | 59.62 |
| $Al_2O_3$ | 14.35 | 14.80 | 14.19 | 10.34 | 12.40 | 13.00 | 10.30 | 13.30 |
| $Na_2O$ | 8.02 | 8.20 | 7.85 | 8.60 | 8.39 | 8.50 | 7.10 | 8.51 |
| $K_2O$ | 4.50 | 5.95 | 5.70 | 4.82 | 4.73 | 4.50 | 5.40 | 2.05 |
| $B_2O_3$ | 3.24 | 3.30 | 3.17 | 3.46 | 4.00 | 2.00 | 3.50 | 3.25 |
| $P_2O_5$ | 5.99 | 4.10 | 3.91 | 4.26 | 4.18 | 5.00 | 5.10 | 4.14 |
| BaO | 6.47 | 4.40 | 10.56 | 6.92 | 6.14 | 5.00 | 7.70 | 6.20 |
| CaO | 1.42 | 3.06 | — | 1.52 | 1.49 | 1.50 | — | 1.54 |
| MgO | — | — | — | — | — | — | 2.00 | 1.75 |
| F | 4.28 | 2.20 | 2.20 | 2.20 | 2.20 | 2.25 | 2.70 | 2.21 |

| | 9 | 10 | 11 | 12 | 13 | 14 | 15 | 16 |
|---|---|---|---|---|---|---|---|---|
| $SiO_2$ | 60.11 | 59.30 | 60.85 | 58.40 | 63.10 | 60.90 | 63.90 | 69.70 |
| $Al_2O_3$ | 13.25 | 10.40 | 12.70 | 14.80 | 12.20 | 12.10 | 10.10 | 4.70 |
| $Na_2O$ | 8.51 | 8.10 | 8.75 | 8.20 | 9.70 | 8.50 | 7.80 | 10.00 |
| $K_2O$ | 3.46 | 2.70 | 2.60 | 1.90 | — | 2.70 | — | — |
| $B_2O_3$ | 2.41 | 4.60 | 1.00 | 3.33 | 3.10 | — | 3.10 | 3.20 |
| $P_2O_5$ | 4.04 | 5.20 | 4.10 | 4.10 | 5.30 | 5.50 | 5.20 | 5.50 |
| BaO | 6.63 | 7.80 | 6.70 | 6.60 | 4.60 | 8.20 | — | — |
| CaO | 1.59 | — | 1.80 | 1.50 | — | — | 2.10 | 2.20 |
| MgO | — | 2.10 | 1.50 | 1.20 | 2.10 | 2.20 | 7.90 | 4.70 |
| F | 2.19 | 2.80 | 2.25 | 3.00 | 1.70 | 3.30 | 1.70 | 1.80 |

| | 17 | 18 | 19 | 20 | 21 | 22 |
|---|---|---|---|---|---|---|
| $SiO_2$ | 58.83 | 60.00 | 63.05 | 64.50 | 55.10 | 62.30 |
| $Al_2O_3$ | 16.51 | 14.85 | 4.25 | 4.40 | 14.47 | 4.58 |
| $Na_2O$ | 8.48 | 9.30 | 11.90 | 12.40 | 8.00 | 11.96 |
| $K_2O$ | 4.72 | — | — | — | 5.83 | — |
| $B_2O_3$ | — | 3.35 | 4.70 | 4.90 | 3.23 | 2.60 |
| $P_2O_5$ | 4.18 | 4.10 | 5.30 | 7.80 | 3.99 | 5.31 |
| BaO | 5.68 | 6.70 | — | — | 2.15 | 8.03 |
| CaO | 1.59 | 1.50 | — | 6.10 | — | — |

TABLE 1 (Continued)

|  | 17 | 18 | 19 | 20 | 21 | 22 |
|---|---|---|---|---|---|---|
| MgO | — | 1.16 | — | — | — | 2.11 |
| SrO | — | — | 10.80 | — | 7.28 | — |
| F | 2.16 | 2.77 | 1.30 | 5.30 | 2.14 | 3.41 |

TABLE 2

|  | A | B | C | D | E |
|---|---|---|---|---|---|
| $SiO_2$ | 56.36 | 56.36 | 56.36 | 56.36 | 56.36 |
| $Al_2O_3$ | 15.84 | 15.84 | 15.84 | 15.84 | 15.84 |
| $Na_2O$ | 8.06 | 8.06 | 8.06 | 8.06 | 8.06 |
| $K_2O$ | 4.53 | 4.53 | 4.53 | 4.53 | 4.53 |
| $B_2O_3$ | 3.25 | 3.25 | 3.25 | 3.25 | 3.25 |
| $P_2O_5$ | 4.02 | 4.02 | 4.02 | 4.02 | 4.02 |
| BaO | 6.51 | 6.51 | 6.51 | 6.51 | 6.51 |
| CaO | 1.43 | 1.43 | 1.43 | 1.43 | 1.43 |
| F (batch) | 3.76 | 2.96 | 2.15 | 1.61 | 0.81 |
| F (anal.) | 2.87 | 2.19 | 1.61 | 1.24 | 0.57 |

Table 3 below reports softening points (S.P) in terms of °C and coefficients of thermal expansion over the range of from 25 to 300°C (Exp.) in terms of $\times 10^{-7}/C°$ determined in accordance with measuring techniques conventional in the glass making art. The development of devitrification (devit.) during the determination of the softening point is noted. High temperature viscosities were measured employing cooling rates of 2C°/minute.

High speed emulsion and crystalline opal liquidus data (°C) were obtained utilising a hot stage microscope composite apparatus.

Samples of the glasses were screened for potential weathering problems by boiling in water for six hours, wiping dry and thereafter heating at 300°C for 15 minutes. Glasses having surface crazing or crizzling observed either macroscopically or microscopically were adjudged failures. $Na_2O$ extraction levels, determined after boiling a glass sample in distilled water for one hour, were also deemed to provide an indication of potential weathering problems. Hence, samples demonstrating $Na_2O$ extraction quantities of less than 4 $\mu g/cm^2$ were considered to be desirably resistant to weathering.

An empirical visual estimation of the density of opacification is also recorded. The term "dense" signifies that the sample exhibited no translucency in the pressed ware or annealed slabs.

In conducting a test for determining the resistance of the present glasses to detergents, samples were immersed into a 0.3% aqueous solution of "SUPER SOILAX" detergent, marketed by Economics Laboratories, St. Paul, Minnesota, U.S.A., operating at 95°C for intervals of 24, 48, 72 and 96 hours. The surface areas of the samples were limited to the ratio of 77 sq. cms to 0.45 kg (12 square inches to one pound) of the solution. The samples were removed periodically from the hot solution, rinsed in tap water and wiped dry. A portion of each sample was coated with "DYE-CHECK" dye penetrant, marketed by Magna-Flux Corporation, Chicago, Illinois, U.S.A. and the dye permitted to remain thereon for 20 seconds. Samples which manifested no dye penetration, i.e. no stain was evident after the dye was wiped clean with a dry cloth, were classified as "AA". Samples from which the stain could be removed with a cloth wetted with "SUPER SOILAX" detergent, were categorised as "A". Samples from which the stain could be removed with a dampened cloth and a commercial powdered cleanser were tabulated as "B". Samples from which the stain could not be removed by the above procedures were listed as "C". When samples received a rating of "B" or less, the testing was not continued. Where visual observation indicated a particular sample exhibited any loss of gloss in the testing, that sample was given a "loss of gloss" rating, which was considered to be equivalent to a "C" rating.

TABLE 3

| | 1 | 2 | 3 | 4 | 5 | 6 | 7 | 8 | 9 | 10 | 11 |
|---|---|---|---|---|---|---|---|---|---|---|---|
| Opacity | Dense | Dense | Dense | Dense | Dense | Dense | Dense | Dense | Dense | Dense | Dense |
| S.P. | 733 | 746 | 718 | 735 | 726 | 809 | 782 | 845 | 780 | 802 | 798 |
| Exp. | 84.1 | 88.7 | 88.6 | 82.1 | 85.0 | 85.9 | 86.5 | 77.8 | 81.5 | 81.2 | 78.2 |
| $Na_2O$ Extraction | — | 4.1 | 2.5 | — | 2.0 | 4.6 | 4.0 | 1.7 | 4.4 | 1.8 | 2.3 |
| Detergent 24 hrs | A | AA | AA | A* | AA | A | A | A | A | A | A |
| Rating 48 hrs | A | AA | A | A* | A | A | A—A* | A | A | A | A |
| 72 hrs | A* | A | A | B* | A | A—B | A—A* | A | A | A | A* |
| 96 hrs | — | A—C | A | — | A | A—B | A—A* | A | A | A | A* |
| Lowest Forming Temp. — Hand Pressing (°C) | — | 1250 | 1215 | — | 1205 | 1250 | 1280 | 1290 | 1345 | 1275 | 1290 |
| Emulsion Liquidus | 1240 | 1060 | 1010 | 1180 | 1140 | 1200 | 1050 | 1170 | 1160 | 1150 | 1160 |
| Crystalline Opal Liquidus | 1030 | 1100 | 570 | 500 | 700 | 695 | 650 | 700 | 600 | 650 | 520 |

* Loss of Gloss

TABLE 3 (Continued)

| | 12 | 13 | 14 | 15 | 16 | 17 | 18 | 19 | 20 | 21 | 22 |
|---|---|---|---|---|---|---|---|---|---|---|---|
| Opacity | Dense | Dense | Dense | Dense | Dense | Dense | Dense | Dense | Dense | Dense | Dense |
| S.P. | 780 | 815 | — | 867 | 800 | 810 | 819 | Devit | Devit | — | 770 |
| Exp. | 81.0 | — | — | 76.8 | 79.0 | 82.1 | 73.7 | 63.0 | — | — | 85.1 |
| $Na_2O$ Extraction | 1.9 | 2.8 | 7.8 | 2.15 | 13.8 | 2.8 | 1.1 | — | — | — | 15 |
| Detergent 24 hrs | A | A | A | A | A* | AA | A | A | | A* | A |
| Rating 48 hrs | A | A* | A | A | A* | A | A | A | Scum in the melt | A* | C |
| 72 hrs | A | B* | A* | A | — | A | A | B | | B* | — |
| 96 hrs | A | — | — | A | — | A | A | C | | — | — |
| Lowest forming Temp. — Hand Pressing (°C) | 1320 | 1280 | 1335 | 1380 | 1230 | 1300 | 1290 | — | — | — | — |
| Emulsion Liquidus | 1150 | — | 1100 | 1050 | 1000 | 1180 | 1110 | 1500 | — | 1500 | 1340 |
| Crystalline Opal Liquidus | 820 | 900 | 680 | 990 | 920 | 700 | 750 | 810 | — | — | 580 |

* Loss of gloss

TABLE 3 (Continued)

| | A | B | C | D | E |
|---|---|---|---|---|---|
| Opacity | Dense | Dense | Dense | Dense | Dense |
| S.P. | 726 | 775 | 806 | 839 | 876 |
| Exp. | 85.6 | 81.7 | 80.9 | 82.3 | 84.1 |
| $Na_2O$ Extraction | 2.7 | — | 2.8 | — | — |
| Detergent 24 hrs | A | — | AA | — | — |
| Rating 48 hrs | A | — | A | — | — |
| 72 hrs | A | — | A | — | — |
| 96 hrs | A | — | A | — | — |
| Lowest Forming Temp. — Hand Pressing (°C) | 1250 | — | 1300 | — | — |
| Emulsion Liquidus | 1150 | 1120 | 1150 | 1280 | 1180 |
| Crystalline Opal Liquidus | 580 | 570 | 620 | 690 | 680 |

A study of Table 3 in conjunction with Tables 1 and 2 immediately indicates the criticality of composition control the secure glasses demonstrating the desired physical properties along with satisfactory melting and forming characteristics. Example C of Table 2 represents the most preferred composition in overall terms of forming behaviour, chemical durability and physical properties.

**Claims**

1. A spontaneous opal glass characterised in that it demonstrates a dense white appearance, a softening point of at least 710°C and excellent chemical durability, contains $Ba_2F(PO_4)$ as the predominant crystalline opal phase and comprises, expressed in terms of weight percent on the oxide basis from 6 to 10% $Na_2O$, from 1 to 6% $K_2O$, from 4 to 11% BaO, from 9 to 18% $Al_2O_3$, from 1 to 5% $B_2O_3$, from 50 to 70% $SiO_2$, from 3.5 to 7% $P_2O_5$ and from 1 to 4% F.

2. A spontaneous opal glass according to claim 1 characterised in that it also contains up to 3.5% CaO and/or up to 5% total of MgO and/or SrO.

3. A process for the production of a spontaneous opal glass according to claim 1 characterised in that it comprises compounding and melting appropriate batch materials.

**Revendications**

1. Un verre opale spontané caractérisé en ce qu'il présente un aspect blanc dense, un point de ramollissement d'au moins 710°C et une excellente durabilité chimique, contient du $Ba_2F(PO_4)$ comme phase opale cristalline prédominante, et comprend, exprimé en % en poids sur la base des oxydes, de 6 à 10% de $Na_2O$, de 1 à 6% de $K_2O$, de 4 à 11% de BaO, de 9 à 18% d'$Al_2O_3$, de 1 à 5% de $B_2O_3$, de 50 à 70% de $SiO_2$, de 3,5 à 7% de $P_2O_5$ et de 1 à 4% de F.

2. Un verre opale spontané selon la revendication 1, caractérisé en ce qu'il contient, en outre, jusqu'à 3,5% de CaO et/ou jusqu'à 5% au total de MgO et/ou SrO.

3. Un procédé pour la production d'un verre opale spontané selon la revendication 1, caractérisé en ce qu'il comprend le mélange et la fusion de matières de départ appropriées.

**Patentansprüche**

1. Spontanes Opalglas, dadurch gekennzeichnet, daß es ein dichtes, weißes Aussehen, einen Erweichungspunkt von wenigstens 710°C und eine ausgezeichnete chemische Beständigkeit aufweist, daß es $Ba_2F(PO_4)$ als die vorherrschende kristalline Opal-Phase enthält und daß es — in Gew.% auf Oxidbasis — 6 bis 10% $Na_2O$, 1 bis 6% $K_2O$, 4 bis 11% BaO, 9 bis 18% $Al_2O_3$, 1 bis 5% $B_2O_3$, 50 bis 70% $SiO_2$, 3,5 bis 7% $P_2O_5$ und 1 bis 4% F enthält.

**0 046 364**

2. Spontanes Opalglas nach Anspruch 1, dadurch gekennzeichnet, daß es auch bis 3,5% CaO und/oder bis zu insgesamt 5% MgO und/oder SrO enthält.

3. Verfahren zur Herstellung eines spontanen Opalglases nach Anspruch 1, dadurch gekennzeichnet, daß geeignete Ansätze zusammengestellt und geschmolzen werden.